# EUROPÄISCHE PATENTSCHRIFT

(11) **EP 1 583 635 B1**
(45) Veröffentlichungstag und Bekanntmachung des Hinweises auf die Patenterteilung: **17.11.2010**
(21) Anmeldenummer: 04701301.6
(22) Anmeldetag: 10.01.2004
(51) Int. Cl.: B23P 15/14, F16D 23/02, F16H 55/17

(54) **BAUEINHEIT AUS EINEM BAUTEIL EINES GETRIEBES UND AUS EINEM KUPPLUNGSKÖRPER**
STRUCTURAL UNIT COMPRISING A PART OF A GEAR MECHANISM AND A COUPLING MEMBER
UNITE MODULAIRE A BASE D'UN ELEMENT CONSTITUTIF DE TRANSMISSION ET D'UN CORPS D'ACCOUPLEMENT

(30) Priorität: 13.01.2003 DE 10301015
(43) Veröffentlichungstag der Anmeldung: 12.10.2005
(73) Patentinhaber: Schaeffler Technologies GmbH & Co. KG, 91074 Herzogenaurach (DE)
(72) Erfinder: LANGKAMP, Thomas, 49124 Georgsmarienhütte (DE); BARTHEL, Joachim, 91466 Gerhardshofen (DE); POLLAK, Burkhard, 8047 Graz (AT)
(86) Internationale Anmeldenummer: PCT/EP2004/000126
(87) Internationale Veröffentlichungsnummer: WO 2004/062844

(56) Entgegenhaltungen:
- WO-A-03/062659
- DE-U- 20 215 431
- FR-A- 2 813 029
- PATENT ABSTRACTS OF JAPAN Bd. 0062, Nr. 01 (M-163), 13. Oktober 1982 (1982-10-13) & JP 57 107437 A (MAZDA MOTOR CORP), 3. Juli 1982 (1982-07-03)

## Beschreibung

### Gebiet der Erfindung

Die Erfindung betrifft eine Baueinheit aus einem Bauteil eines Getriebes und aus einem mit einer außen umfangsseitigen Verzahnung versehenen scheibenförmigen Kupplungskörper, bei der das Bauteil und der Kupplungskörper mit wenigstens einer ersten Schweißverbindung miteinander verbunden sind und bei der das Bauteil und der Kupplungskörper um eine gemeinsame Rotationsachse drehbar sind, wobei die Schweißverbindung radiat zu der Rotationsachse beabstandet angeordnet ist.

### Hintergrund der Erfindung

Derartige Baueinheiten dienen in Fahrzeuggetrieben zum Herstellen lösbarer Drehverbindungen zum Übertragen von Drehmomenten und Leistungsflüssen. Dazu greift in der Regel eine Schaltmuffe mit einer Verzahnung in eine Außenverzahnung des Kupplungskörpers ein. Die Verzahnung ist in der Regel mit radial nach außen aus dem Kupplungskörper hervorstehenden Zähnen versehen, die im Regelfall einen gemeinsamen Fußkreis aufweisen. Es gibt auch Anwendungen, bei denen die Zähne zunächst teilweise stirnseitig aus dem Kupplungskörper hervorstehen. In Synchronisationen weist die Verzahnung an den Zähnen oft die üblichen Dachschrägen und flankenseitigen Hinterschnitte auf. Der Kupplungskörper ist drehfest zumeist mit einem Gangrad verbunden. Dabei ist die drehfeste Verbindung zwischen dem Gangrad und dem Kupplungskörper entweder direkt vom Kupplungskörper zum Gangrad oder vom Kupplungskörper über eine Welle zum Gangrad hergestellt. Die gebräuchlichsten Baueinheiten sind Einheiten aus einem Zahnrad und aus einem Kupplungskörper. Es gibt aber auch Anwendungen, bei denen der Kupplungskörper direkt mit einer Getriebewelle verbunden ist. Die Verbindung ist üblicherweise über Formschluss zwischen dem Zahnrad und dem Kupplungskörper oder über Stoffschluss durch Schweißen hergestellt.

Eine gattungsgemäße Baueinheit mit einer Schweißverbindung zwischen dem Kupplungskörper und dem Gangrad ist in US 3,678,557 beschrieben. In einem Ringspalt stirnseitig zwischen dem Gangrad und der äußeren Verzahnung des Kupplungskörpers, der außerdem eine konische Reibfläche aufweist, ist mittels Elektronenstrahlschweißens eine feste Verbindung zwischen dem Kupplungskörper und dem Gangrad erzeugt. Ein derartiger Ringspalt wirkt sich nachteilig auf die Baulänge der Baueinheit und damit auf das Getriebe aus. Häufig wird deshalb in modernen Getrieben auf einen derartigen Ringspalt verzichtet. Die Verzahnungen des Gangrades und des Kupplungskörpers sind in diesem Fall axial so dicht aneinander angeordnet, dass das Herstellen einer Schweißverbindung von außen nicht möglich ist, ohne dass die Verzahnung(en) nach dem Schweißen beschädigt und unbrauchbar sind. Häufig ist deshalb eine Schweißverbindung an den Stoßstellen in den Durchgangsbohrungen an Baueinheiten aus einem Losrad und einem Kupplungskörper oder zwischen einem bzw. beiden Rändern des Durchgangsloches und einer Welle hergestellt.

Die beim Schweißen dieser radial der Rotationsachse naheliegenden Verbindung eingebrachte Wärmemenge verursacht häufig Wärmeverzug, insbesondere am im Vergleich zum Zahnrad relativ dünnwandigen Kupplungskörper. Der Kupplungskörper wölbt sich in Folge des Wärmeverzugs an seinen von der Rotationsachse und zumeist mit einer Verzahnung versehenen Rändern tellerfederförmig auf und von dem Gangrad weg, so dass radial außen auf Höhe der Verzahnung des Kupptungskörpers zwischen der dem Kupplungskörper zugewandten Stirnseite des Zahnrades und dem Kupplungskörper ein Spaltmaß entsteht. In Versuchen wurden Spaltmaße bis zu 5/10 Millimetern in diesem Bereich gemessen. Die Nachteile liegen auf der Hand. Einerseits verliert die Verzahnung des Kupplungskörpers ihre bestimmungsgemäße Ausrichtung, so dass ein exaktes Eingreifen z. B. einer Schaltmuffe nicht mehr abgesichert ist. Andererseits reicht in Synchronkupplungen der Abstand zwischen einem durch die Schaltmuffe axial verschiebbaren Synchronring und dem Kupplungskörper nicht mehr aus, um einen wirksamen Reibschluss zwischen dem Synchronring und dem Reibkonus zu erzeugen. Aus diesen Gründen wird oft auf eine formschlüssig-drehfeste Verbindung zwischen dem Kupplungskörper und/oder einer Getriebewelle oder ähnliches zurückgegriffen. Der Kupplungskörper und z. B. das Zahnrad werden dann als Einzelteile in das Getriebe eingesetzt. Es entstehen Nachteile gegenüber einer kostengünstig mittels Schweißverbindung hergestellten Baueinheit durch erhöhte Montagezeiten aufgrund der Montage einzelner Bauteile und durch den vergrößerten Aufwand beim Transport und der Lagerung der einzelnen Bauteile.

### Zusammenfassung der Erfindung

Die Aufgabe der Erfindung ist es daher, eine Baueinheit aus einem Getriebebauteil wie einer Getriebewelle und/oder einem Zahnrad sowie einem Kupplungskörper zu schaffen, mit der die beschriebenen Nachteile vermieden sind.

Diese Aufgabe ist nach dem Gegenstand des kennzeichnenden Teils des Anspruchs 1 dadurch gelöst, dass der Kupplungskörper und das Bauteil mittels wenigstens einer zweiten Schweißverbindung aneinander befestigt sind. Die zweite. Schweißverbindung ist dabei radial weiter von der Rotationsachse beabstandet, als die erste Schweißverbindung. Die zweite Schweißverbindung ist weiterhin radial zwischen dem Fußkreis der Verzahnung des Kupplungskörpers und der ersten Schweißverbindung ausgebildet. Das stirnseitige Auswölben der Ränder des Kupplungskörpers wird mit einer derartigen Gestaltung der Baueinheit zumindest teilweise verhindert. Es sind alternativ umlaufend eine Ringschweißnaht, z. B. durch Reibschweißen erzeugt, oder einzelne Schweißnähte vorgesehen, die möglichst weit von der Rotationsachse und somit möglichst weit radial außen von der (den) ersten, vorzugsweise an einem Durchgangsloch für einen Sitz auf der Welle angeordneten, Schweißverbindung(en) entfernt sind.

Eine vorzugsweise Ausgestaltung der Erfindung sieht vor, dass der Kupplungskörper wenigstens zwei radial von der Rotationsachse beabstandete und durch den Kupplungskörper gleichgerichtet mit der Rotationsachse durchgehende Löcher aufweist. In jedem der Löcher ist zumindest eine der erfindungsgemäßen Schweißverbindungen durch eine Ringnaht / umlaufende Naht oder durch eine in ihrer Länge begrenzte Heftnaht erzeugt. Dabei wird eine Schweißverbindung zwischen dem Bauteil, z. B. einem Zahnrad, und dem die Löcher begrenzenden Material des Kupplungskörpers hergestellt. Die Löcher sind entweder zum Zweck der Befestigung mit der erfindungsgemäßen zweiten Schweißnaht gesondert in den Kupplungskörper eingebracht oder es werden die üblicherweise bekannten Löcher für den Eingriff von Mitnehmern eines Reibringes genutzt. In diesem Zusammenhang sei erwähnt, dass sich diese Erfindung auch an Kupplungskörpern anwenden lässt, bei denen ein Reibring in Form eines dünnwandigen Reibkonus stirnseitig mit dem Kupplungskörper. verschweißt ist.

Im weiteren ist die Erfindung durch ein Verfahren zum Verbinden des Bauteiles mit dem Kupplungskörper nach Anspruch 1 beschrieben, wobei zunächst die zweite und somit äußere Schweißverbindung nach dem Ausrichten der zu verschweißenden Bauteile aneinander hergestellt ist und dann erst die der Rotationsachse am nächsten liegende(en) ersten Schweißverbindung(en) erzeugt sind Mit dem Heften des Kupplungskörpers an dem Bauteil zuerst über die äußeren Schweißnähte ist das Bauteil am Wärmeverzug durch die häufig mit größerer Wärmemenge eingebrachte, der Rotationsachse am nächsten liegende(en) Schweißverbindung(en) gehindert. Die Werkstoffe der Bauteile der Baueinheit sind schweißbare Stähle oder andere schweißbare Metallwerkstoffe, wie z. B. Messing. Die Verbindungen in der Baueinheit sind vorzugsweise mittels Schweißverfahren wie Laserschweißen und Kondensator-Entladungsschweißen aber vorzugsweise mit Elektronenstrahlschweißen hergestellt.

### Beschreibung der Zeichnungen

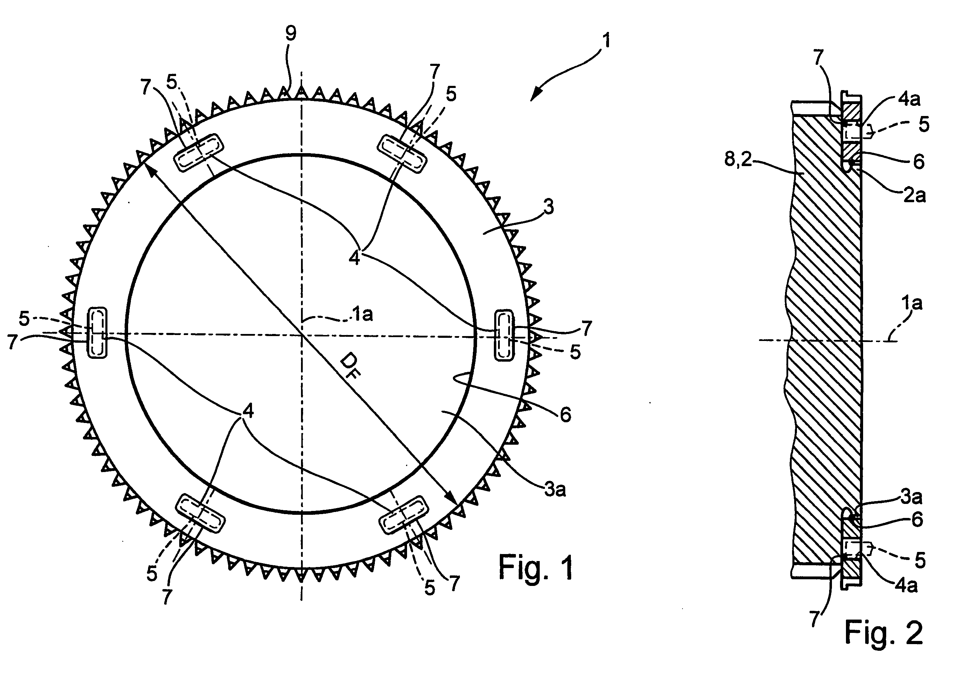

Die Figuren 1 und 2 zeigen ein Ausführungsbeispiel einer erfindungsgemäßen Baueinheit 1 eines nicht weiter dargestellten Getriebes mit einem Bauteil 8 in Form eines Zahnrades 2 und einem Kupplungskörper 3. Am Außenumfang des Kupplungskörpers 3 ist die Verzahnung 9 ausgebildet. Der Kupplungskörper 3 sitzt auf einem Absatz 2a des Zahnrades 2. Außerdem weist der Kupplungskörper 3 durchgehende Löcher 4 auf. Die Löcher 4 sind mit gleichmäßiger Teilung zueinander um die Rotationsachse 1 a verteilt und weisen gleiche Abstände zu dieser auf. In die Löcher 4 greifen die gestrichelt und nur teilweise gezeichneten Mitnehmer 5 eines nicht weiter dargestellten Reibringes ein. Beim Verbinden des Zahnrades 2 mit dem Kupplungskörper 3 werden zunächst an den Rändern der die Löcher 4 begrenzenden Wand 4a die erfindungsgemäßen zweiten Schweißverbindungen 7 in Form von Heftschweißnähten oder Schweißpunkten hergestellt. Im weiteren Verlauf des Verfahrens ist dann die erste Schweißverbindung 6 in Form einer Ringnaht erzeugt. Die Ringnaht verbindet den Absatz 2a am Zahnrad 2 mit der aus dem Material des Kupplungskörpers 3 gebildeten Wand des von der Rotationsachse 1 a der Baueinheit 1 durchdrungenen Durchgangsloches 3a. Die zweiten Schweißverbindungen 7 sind somit radial zwischen der ersten Schweißverbindung 6 und dem Fußkreis D_{F} der Verzahnung 9 ausgebildet.

### Bezugszeichen

- 1: Baueinheit
- 1a: Rotationsachse
- 2: Zahnrad
- 2a: Absatz
- 3: Kupplungskörper
- 3a: Durchgangsloch
- 4: Loch
- 4a: Wand
- 5: Mitnehmer
- 6: erste Schweißverbindung
- 7: zweite Schweißverbindung
- 8: Bauteil
- 9: Verzahnung

## Patentansprüche

1. Baueinheit (1) aus einem Bauteil (8) eines Getriebes und aus einem scheibenförmigen Kupplungskörper (3) mit einer außen-umfangsseitigen Verzahnung 9, bei der das Bauteil (8) und der Kupplungskörper (3) mit wenigstens einer ersten Schweißverbindung (6) miteinander verbunden sind und bei der das Bauteil (8) und der Kupplungskörper (3) um eine gemeinsame Rotationsachse (1a) drehbar sind, wobei die erste Schweißverbindung (6) radial zu der Rotationsachse (1a) beabstandet angeordnet ist, **dadurch gekennzeichnet, dass** der Kupplungskörper (3) und das Bauteil (8) mittels wenigstens einer zweiten Schweißverbindung (7) aneinander befestigt sind und die zweite Schweißverbindung (7) dabei radial weiter von der Rotationsachse (1a) beabstandet ist, als die erste Schweißverbindung (6), und dabei die zweite Schweißverbindung (7) radial zwischen dem Fußkreis der Verzahnung (9) und der ersten Schweißverbindung (6) ausgebildet ist, und dass das Bauteil (8) als Zahnrad (2) oder als Welle ausgebildet ist.

2. Baueinheit nach Anspruch 1, **dadurch gekennzeichnet, dass** der Kupplungskörper (3) mittig ein von der Rotationsachse (1 a) durchdrungenes Durchgangsloch (3a) aufweist, wobei die erste Schweißverbindung (6) zwischen dem Bauteil (8) und einem das Durchgangsloch (3a) begrenzenden Material des Kupplungskörpers (3) ausgebildet ist.

3. Baueinheit nach Anspruch 1 oder 2, **dadurch gekennzeichnet, dass** der Kupplungskörper (3) wenigstens zwei radial von der Rotationsachse (1a) beabstandete und durch den Kupplungskörper (3) gleichgerichtet mit der Rotationsachse (1a) hindurchgehende Löcher (4) aufweist, wobei die Baueinheit (1) an jedem der Löcher (4) jeweils zumindest eine der zweiten Schweißverbindungen (7) zwischen dem Bauteil (8) und einem das jeweilige der Löcher (4) begrenzenden Material des Kupplungskörpers (3) aufweist.

4. Baueinheit nach Anspruch 3, **dadurch gekennzeichnet, dass** in wenigstens eines der Löcher (4) ein Mitnehmer (5) eines mit der Baueinheit (1) um die Rotationsachse (1a) zumindest zeitweise gleichgerichtet drehenden Synchronringes einer Synchronisiereinheit eingreift.

5. Baueinheit nach Anspruch 1, **dadurch gekennzeichnet, dass** das Bauteil (1) ein Zahnrad (2) ist.

6. Verfahren zum Verbinde des Bauteils (8) mit dem Kupplungskörper (3) nach Anspruch 1, **dadurch gekennzeichnet, dass** die erste Schweißverbindung (6) nach der zweiten Schweißverbindung (7) hergestellt ist.

7. Verfahren zum Verbinden des Bauteils (8) mit dem Kupplungskörper (3) nach Anspruch 1, **dadurch gekennzeichnet, dass** zumindest die zweite Schweißverbindung (7) mittels Elektronenstrahlschweißens hergestellt ist.

## Claims

1. Structural unit (1) consisting of a transmission component (8) and of a disc-shaped clutch body (3) with an externally circumferential toothing (9), in which the component (8) and the clutch body (3) are connected to one another by means of at least one first welded joint (6), and in which the component (8) and the clutch body (3) are rotatable about a common axis of rotation (1a), the first welded joint (6) being arranged radially at a distance from the axis of rotation (1a), **characterized in that** the clutch body (3) and the component (8) are fastened to one another by means of at least one second welded joint (7), and the second welded joint (7) is in this case radially at a greater distance from the axis of rotation (1a) than the first welded joint (6), and in this case the second welded joint (7) is formed radially between the root circle of the toothing (9) and the first welded joint (6), and **in that** the component (8) is designed as a gearwheel (2) or as a shaft.

2. Structural unit according to Claim 1, **characterized in that** the clutch body (3) has centrally a through-hole (3a) penetrated by the axis of rotation (1a), the first welded joint (6) being formed between the component (8) and material of the clutch body (3), the said material delimiting the through-hole (3a).

3. Structural unit according to Claim 1 or 2, **characterized in that** the clutch body (3) has at least two holes (4) which are located radially at a distance from the axis of rotation (1a) and which pass through the clutch body (3) co-directionally with the axis of rotation (1a), the structural unit (1) having at each of the holes (4) in each case at least one of the second welded joints (7) between the component (8) and material of the clutch body (3), the said material delimiting the respective hole of the holes (4).

4. Structural unit according to Claim 3, **characterized in that** a dog (5) of a synchronizing ring, rotating at least temporarily co-directionally with the structural unit (1) about the axis of rotation (1a), of a synchronizing unit engages into at least one of the holes (4).

5. Structural unit according to Claim 1, **characterized in that** the component (8) is a gearwheel (2).

6. Method for connecting the component (8) to the clutch body (3) according to Claim 1, **characterized in that** the first welded joint (6) is produced after the second welded joint (7).

7. Method for connecting the component (8) to the clutch body (3) according to Claim 1, **characterized in that** at least the second welded joint (7) is produced by means of electron beam welding.

## Revendications

1. Unité modulaire (1) composée d'un élément (8) d'une transmission et d'un corps d'accouplement en forme de disque (3) avec une denture périphérique extérieure (9), dans laquelle l'élément (8) et le corps d'accouplement (3) sont assemblés l'un à l'autre par au moins une première soudure (6) et dans laquelle l'élément (8) et le corps d'accouplement (3) sont aptes à tourner autour d'un axe de rotation commun (1a), dans laquelle la première soudure (6) est disposée radialement à distance de l'axe de rotation (1a), **caractérisée en ce que** le corps d'accouplement (3) et l'élément (8) sont fixés l'un à l'autre au moyen d'au moins une deuxième soudure (7) et la deuxième soudure (7) est en l'occurrence disposée radialement à plus grande distance de l'axe de rotation (1a) que la première soudure (6), et la deuxième soudure (7) est en l'occurrence réalisée radialement entre le cercle de pied de la denture (9) et la première soudure (6), et **en ce que** l'élément (8) se présente sous la forme d'une roue dentée (2) ou d'un arbre.

2. Unité modulaire selon la revendication 1, **caractérisée en ce que** le corps d'accouplement (3) présente au milieu un trou passant (3a) traversé par l'axe de rotation (1a), dans laquelle la première soudure (6) est réalisée entre l'élément (8) et une matière du corps d'accouplement (3) limitant le trou passant (3a).

3. Unité modulaire selon la revendication 1 ou 2, **caractérisée en ce que** le corps d'accouplement (3) présente au moins deux trous espacés radialement de l'axe de rotation (1a) et traversant le corps d'accouplement (3) suivant la même direction que l'axe de rotation (1a), dans laquelle l'unité modulaire (1) présente à chacun des trous (4) respectivement au moins une des deuxièmes soudures (7) entre l'élément (8) et une matière du corps d'accouplement (3) limitant le trou respectif (4).

4. Unité modulaire selon la revendication 3, **caractérisée en ce qu'**un entraîneur (5) d'une bague de synchronisation d'une unité de synchronisation tournant avec l'unité modulaire (1) autour de l'axe de rotation (1a) au moins temporairement avec la même orientation, s'engage dans au moins un des trous (4).

5. Unité modulaire selon la revendication 1, **caractérisée en ce que** l'élément (8) est une roue dentée (2).

6. Procédé pour assembler l'élément (8) au corps d'accouplement (3) selon la revendication 1, **caractérisé en ce que** la première soudure (6) est réalisée après la deuxième soudure (7).

7. Procédé pour assembler l'élément (8) au corps d'accouplement (3) selon la revendication 1, **caractérisé en ce qu_{'}**au moins la deuxième soudure (7) est réalisée par soudage au faisceau d'électrons.
